# EUROPEAN PATENT APPLICATION

(11) **EP 4 382 198 A1**
(43) Date of publication of application: **12.06.2024**
(21) Application number: 22852696.8
(22) Date of filing: 22.06.2022
(51) Int. Cl.: B01J 19/20, B01F 27/72, B01F 33/40, B01F 35/90, C04B 35/64, H01M 10/0562, H01M 10/058

(54) **REACTION DEVICE, REACTION SYSTEM, MATERIAL PRODUCTION SYSTEM, BATTERY MATERIAL PRODUCTION SYSTEM, BATTERY PRODUCTION SYSTEM, REACTION PRODUCT PRODUCTION METHOD, BATTERY MATERIAL PRODUCTION METHOD, AND BATTERY PRODUCTION METHOD**

(30) Priority: 02.08.2021 JP 2021126703
(71) Applicant: The Japan Steel Works, Ltd., Tokyo 141-0032 (JP)
(72) Inventor: UEDA, Naoki, Tokyo 141-0032 (JP); NAKAMURA, Satoru, Tokyo 141-0032 (JP); FURUKI, Kenichi, Tokyo 141-0032 (JP)
(74) Representative: Simmons & Simmons LLP (Munich)
(86) International application number: PCT/JP2022/024817
(87) International publication number: WO 2023/013270

(57) **Abstract**

A reaction furnace (100) in this reaction device (10) is cylindrical and has a supply port for receiving a supplied starting material on one end side and a delivery port for a reaction product on the other end side. A temperature control area (110) includes a heating device or a cooling device and controls the temperature of the reaction furnace at a predetermined position in an intermediate section between the supply port and the delivery port. A screw (120) extends from one end side to the other end side of the reaction furnace and thereby rotates so as to make it possible to convey the starting material supplied from the supply port toward the delivery port. A first fluid control area (130) includes a first fluid inlet and a first fluid outlet for causing a first fluid to pass through the reaction furnace in a predetermined area in the intermediate section. A second fluid control area (140) includes a second fluid inlet and a second fluid outlet for causing a second fluid to pass through an area different from the first fluid control area in the intermediate section.

## Description

### Technical Field

The present disclosure relates to a reaction apparatus, a reaction system, a material manufacturing system, a battery material manufacturing system, a battery manufacturing system, a reaction product manufacturing method, a battery material manufacturing method, and a battery manufacturing method.

### Background Art

There is a reaction apparatus for manufacturing a desired product from powder-granular raw materials by providing a specific atmosphere to them. For example, a reaction apparatus, commonly referred to as a rotary kiln, heats a hollow reaction furnace that rotates around a central axis. A desired product is manufactured by passing materials through this reaction furnace while rolling them. A reaction apparatus, for example, referred to as a roller hearth kiln, manufactures a desired product by passing raw materials and workpieces through a tunnel-type reaction furnace. Various other reaction apparatuses have been developed.

For example, Patent Literature 1 discloses the following reaction apparatus. The reaction apparatus includes a screw feeder body serving as a pressure reaction vessel, a catalyst supply unit for introducing a catalyst into the screw feeder body, and a lower hydrocarbon supply unit for introducing lower hydrocarbons into the screw feeder body. The reaction apparatus includes a screw for transferring generated nano-carbon, a solid discharge unit for discharging the catalyst and nano-carbon transferred by the screw, and a gas discharge unit for discharging generated hydrogen outside the feeder body.

### Citation List

### Patent Literature

Patent Literature 1: Japanese Unexamined Patent Application Publication No. 2006-290682

### Summary of Invention

### Technical Problem

However, continuous rotary kilns, for example, do not allow fine control of the temperature in the axial direction in the furnace. Roller hearth kilns also do not have a function to stir the raw materials in the furnace, because they convey the powder-granular materials in a sheath. In addition, in the above-mentioned reaction apparatus using a screw, there is only one type of reaction by material and catalyst introduced from an entrance of the screw feeder. Therefore, the apparatus becomes complex and difficult to manage when a plurality of reactions are required to manufacture a desired product.

The present disclosure has been made to solve such a problem, and provides a reaction apparatus for efficiently manufacturing a desired product.

### Solution to Problem

A reaction apparatus according to the present disclosure includes a reaction furnace, a temperature control region, a screw, a first fluid control region, and a second fluid control region. The reaction furnace is cylindrical and includes a supply port configured to receive a raw material to be supplied at one end and a discharge port configured to discharge a reaction product at another end. The temperature control region includes a heating apparatus or a cooling apparatus configured to control a temperature of the reaction furnace at a predetermined position in an intermediate part between the supply port and the discharge port. The screw extends from the one end of the reaction furnace to the other end thereof and is configured to be able to convey the raw material supplied from the supply port toward the discharge port by rotating. The first fluid control region includes a first fluid inlet and a first fluid outlet configured to allow a first fluid to pass through the reaction furnace in a predetermined region in the intermediate part. The second fluid control region includes a second fluid inlet and a second fluid outlet configured to allow a second fluid to pass through a region different from the first fluid control region in the intermediate part.

A reaction product manufacturing method according to the present disclosure is executed by the following reaction apparatus. The reaction apparatus is a cylindrical reaction furnace and includes a supply port configured to receive a raw material to be supplied at one end and a discharge port configured to discharge a reaction product at another end. The reaction apparatus conveys the raw material toward the discharge port by a screw extending from the one end of the reaction furnace to the other end thereof. The reaction apparatus controls a temperature of the reaction furnace at a predetermined position in an intermediate part between the supply port and the discharge port. The reaction apparatus allows a first fluid to pass through the reaction furnace in a first fluid control region provided in the intermediate part. The reaction apparatus allows a second fluid to pass through the reaction furnace in a second fluid control region, the second fluid control region being different from the first fluid control region in the intermediate part. The reaction apparatus discharges the reaction product passed through the second fluid control region from the discharge port.

A battery material manufacturing method according to the present disclosure is executed by the following battery material manufacturing apparatus. The battery material manufacturing apparatus receives a predetermined material to a cylindrical reaction furnace including a supply port configured to receive a raw material to be supplied at one end and a discharge port configured to discharge a reaction product at another end from the supply port. The battery material manufacturing apparatus conveys the raw material toward the discharge port by a screw extending from the one end of the reaction furnace to the other end thereof. The battery material manufacturing apparatus controls a temperature of the reaction furnace at a predetermined position in an intermediate part between the supply port and the discharge port. The battery material manufacturing apparatus allows a first fluid to pass through the reaction furnace in a first fluid control region provided in the intermediate part. The battery material manufacturing apparatus allows a second fluid to pass through the reaction furnace in a second fluid control region, the second fluid control region being different from the first fluid control region and provided in the intermediate part. The battery material manufacturing apparatus discharges a reaction product manufactured as the reaction product from the discharge port. The battery material manufacturing apparatus kneads the discharged reaction product, a binder resin, and a solid electrolyte and continuously extrudes a mixture of the solid electrolyte and the binder resin to thereby manufacture a kneaded product. The battery material manufacturing apparatus forms the kneaded product into a sheet to manufacture a battery material.

### Advantageous Effects of Invention

According to the present disclosure, it is possible to provide a reaction apparatus for efficiently manufacturing a desired product.

### Brief Description of Drawings

Fig. 1 is a side view of a reaction apparatus according to a first embodiment;
Fig. 2 is a block diagram of the reaction apparatus according to the first embodiment;
Fig. 3 is a flowchart of processing executed by the reaction apparatus;
Fig. 4 is a side view of a reaction apparatus according to a second embodiment;
Fig. 5 is a cross-sectional view of the reaction furnace according to the second embodiment;
Fig. 6 is a configuration diagram of a reaction system according to a third embodiment;
Fig. 7 is a configuration diagram of a reaction system according to a fourth embodiment;
Fig. 8 is a configuration diagram of a reaction system according to a fifth embodiment; and
Fig. 9 is a configuration diagram of a battery material manufacturing system according to a sixth embodiment.

### Description of Embodiments

Hereinafter, the present disclosure will be described through embodiments of the disclosure, but the disclosure set forth in claims is not limited to the following embodiments. Furthermore, not all of the configurations described in the embodiments are essential as means for solving problems. For clarity, the following descriptions and drawings have been omitted and simplified as appropriate. In each drawing, the same elements have the same reference signs, and repeated descriptions have been omitted as necessary.

### <First embodiment>

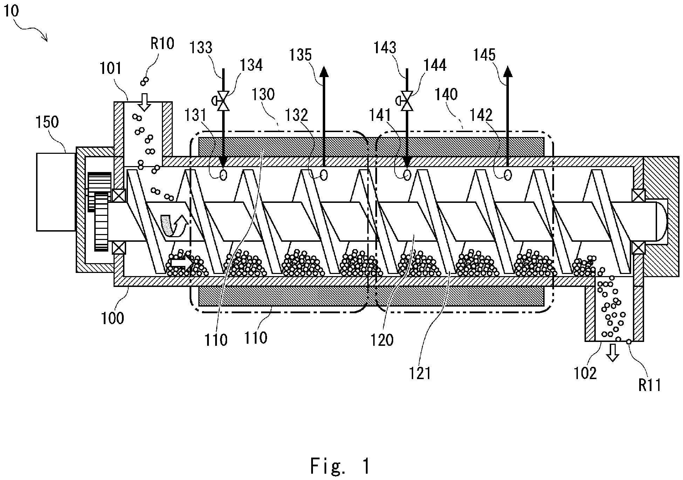

Referring to Fig. 1, main components of a reaction apparatus according to a first embodiment will be described. Fig. 1 is a side view of a reaction apparatus 10 according to the first embodiment. The reaction apparatus 10 shown in Fig. 1 is partially cut for clarity. The reaction apparatus 10 is for manufacturing a reaction product by, for example, providing a condition such as a predetermined physical stimulus to a powder-granular raw material. The type and state of the raw material and the reaction product are not particularly limited, but may be an inorganic substance such as a metal oxide or a metal sulfide containing lithium as one of the components, or may be an organic substance such as a hydrocarbon. In addition, the shape and size of the raw material and the reaction product are not particularly limited. However, when the raw material and the reaction products have a lumpy shape, the diagonal length of the lumpy shape is preferably 0.1 mm to 50 mm, and more preferably 1 to 20 mm. Furthermore, when the raw material and the reaction products have a lumpy shape, the ratio of the diagonal length (aspect ratio) is preferably 1 to 10, and more preferably 1.3 to 1.8. The reaction apparatus 10 has a reaction furnace 100, a temperature control region 110, a screw 120, a first fluid control region 130, and a second fluid control region 140 as main components.

The reaction furnace 100 is a cylindrical furnace having a supply port 101 for receiving raw materials to be supplied to one end side and a discharge port 102 for reaction products to be discharged on the other end side. The reaction furnace 100 has an intermediate part between the supply port 101 and the discharge port 102. The reaction furnace 100 is formed of a material that allows temperature changes during the manufacture of reaction products in the reaction furnace and contact with materials supplied in the furnace. For example, the reaction furnace 100 may be formed of an alloy made mainly of nickel or chromium or a ceramic containing alumina. For example, the screw 120 may be formed of an alloy made mainly of nickel or chromium or a ceramic containing alumina.

The reaction apparatus 10 shown in Fig. 1 is oriented horizontally and has the supply port 101 at the upper left end and the discharge port 102 at the lower right end. The reaction furnace 100 shown in Fig. 1 receives a raw material R10 from the supply port 101. The reaction apparatus 10 rotates the screw 120 provided inside the reaction furnace 100 to propel the raw material R10 received by the reaction furnace 100 toward the discharge port 102. That is, the raw material R10 supplied to the reaction furnace 100 passes through the intermediate part and moves toward the discharge port 102. The reaction apparatus 10 manufactures a reaction product R11 from the raw material R10 by passing the raw material R10 through the intermediate part of the reaction furnace 100. The reaction furnace 100 then discharges the manufactured reaction product R11 from the discharge port 102.

The temperature control region 110 includes a temperature control apparatus, i.e., a heating apparatus or a cooling apparatus, to control the temperature of the reaction furnace at a predetermined position in the intermediate part between the supply port 101 and the discharge port 102. The temperature control region 110 shown in Fig. 1 has a heating apparatus at the intermediate part of the reaction furnace 100 to surround the cylindrical reaction furnace 100. The heating apparatus includes any heater capable of temperature control such as, for example, a sheath heater, a coil heater, or a ceramic heater. The heating apparatus performs heating in a range of, for example, normal temperature to about 800 degrees Celsius. The temperature control region 110 can set different temperatures along the axial direction of the screw 120 for each region of the intermediate part of the reaction furnace 100, which will be described later. For example, the temperature control region 110 can control the temperature change applied to the raw material R10 in the first fluid control region 130 and the second fluid control region 140, which will be described later.

The temperature control region 110 can also include a control apparatus for controlling the heating apparatus or the cooling apparatus. For example, the temperature control region 110 may include a thermometer for monitoring the temperature at a predetermined position in the reaction furnace 100. The reaction furnace 100 may also control the temperature, for example, by monitoring a current value if the heating apparatus has a principle of heating by passing a current.

The temperature control region 110 may be configured to perform heating or cooling, for example, by circulating water or oil. The temperature control region 110 may be configured to perform cooling, for example, by using a Peltier element. With the above configuration, the temperature control region 110 can set various temperature distributions along the axial direction of the screw 120 in the reaction furnace 100.

The screw 120 is extended from one end side to the other end side of the reaction furnace 100 and can convey the raw material R10 supplied from the supply port 101 toward the discharge port 102 by rotating. The screw 120 shown in Fig. 1 has spiral-shaped projections 121 around an axis extending in the left-right direction. By rotating these projections 121 in contact with the raw material R10, the screw 120 conveys the raw material R10 from the left side to the right side in Fig. 1.

The shape of the projections 121 shown in Fig. 1 is one example, and the shape of the projections 121 is not limited to this. The shape of the projections 121 may vary for different regions of the reaction furnace 100. More specifically, for example, the pitch of the spiral of the projections 121 may vary. The spiral shape of the projections 121 may consist of not one but two threads. The projections 121 may also have sections that are not spiral-shaped. As a result, the reaction apparatus 10 can set the speed of movement and the behavior of objects inside the reaction furnace 100 for each region. More specifically, for example, the reaction apparatus 10 conveys, stirs, mixes, kneads, or grinds the objects in the reaction furnace 100.

The screw 120 is pivotally supported at both ends of the reaction furnace 100. The screw 120 shown in Fig. 1 connects to the drive apparatus 150 on the side of the supply port 101. The drive apparatus 150 has a predetermined rotation mechanism such as a motor to rotate the screw 120. The drive apparatus 150 may be configured to vary the rotational speed of the screw 120. In this case, the drive apparatus 150 may be a motor with an adjustable rotational speed or a combination of a motor with a constant rotational speed and a reduction gear with an adjustable reduction ratio.

The first fluid control region 130 includes a first fluid inlet 131 and a first fluid outlet 132 for allowing a first fluid to pass through the reaction furnace 100 in a predetermined region in the intermediate part. The first fluid control region 130 is provided between the supply port 101 and the second fluid control region 140 in the reaction furnace 100. The first fluid inlet 131 connects to a first fluid supply pipe 133 to supply the first fluid supplied from the first fluid supply pipe 133 to the reaction furnace 100. The first fluid supply pipe 133 includes a first valve 134 for adjusting a flow rate of the first fluid. The first fluid outlet 132 is a hole for discharging the fluid of the first fluid control region 130 outside the reaction furnace 100.

According to the above configuration, the reaction apparatus 10 allows the raw material R10 and the first fluid to react in the first fluid control region 130 to manufacture an intermediate material. The reaction apparatus 10 also discharges a fluid after the reaction outside the first fluid control region 130. Further, the reaction apparatus 10 conveys the raw material R10 or the reaction product while the screw 120 is rotated, and further brings the first fluid into contact with it, thereby facilitating the reaction with the first fluid. The first fluid may be a gas or a liquid.

The second fluid control region 140 includes a second fluid inlet 141 and a second fluid outlet 142 for allowing the second fluid to pass in a region different from the first fluid control region 130 in the intermediate part. That is, the second fluid control region 140 may have a configuration equivalent to that of the first fluid control region 130 in a region different from the first fluid control region 130.

The second fluid control region 140 is provided between the first fluid control region 130 and the discharge port 102 in the reaction furnace 100. The second fluid inlet 141 connects to a second fluid supply pipe 143 to supply a second fluid supplied from the second fluid supply pipe 143 to the reaction furnace 100. The second fluid supply pipe 143 includes a second valve 144 for adjusting the flow rate of the second fluid. The second fluid outlet 142 is a hole for discharging the fluid of the second fluid control region 140 outside the reaction furnace 100.

According to the above-described configuration, the reaction apparatus 10 allows the intermediate material, which has passed through the first fluid control region 130 and the second fluid, to react in the second fluid control region 140 to manufacture the reaction product R11. The reaction apparatus 10 also discharges a fluid after the reaction outside the second fluid control region 140. The second fluid may be a gas or a liquid.

Although the configuration of the reaction apparatus 10 has been described above, the reaction apparatus 10 according to the first embodiment is not limited to the configuration described above. For example, there may be two or more screws 120 as long as the number of the screws 120 is one or more. That is, the reaction apparatus 10 may have a plurality of screws 120 arranged in parallel.

The cross-sectional shape in a plane orthogonal to the axis of the screw 120 of the reaction furnace 100 may have a combination of lines defined as a curve of constant width (i.e. Reuleaux polygon). In this case, the cross-sectional shape of the projection 121 of the screw 120 has a shape composed of a plurality of arcs corresponding to the curves of constant width (i.e. Reuleaux polygon). For example, when the cross-sectional shape inside the reaction furnace 100 is circular, the cross-sectional shape of the screw 120 has a shape bounded by curves of constant width (i.e. Reuleaux polygon) composed of three arcs.

The reaction furnace 100 is not limited to be oriented horizontally parallel, and instead may have a predetermined angle with respect to a horizontal plane, and the reaction furnace 100 may have an inclined surface. The reaction apparatus 10 may have the first fluid control region 130 and the second fluid control region 140 in the intermediate part, and may also have a configuration for allowing another fluid to pass therethrough. In other words, the reaction apparatus 10 may have three or more fluid control regions. The reaction apparatus 10 described above is controlled by a control apparatus described later.

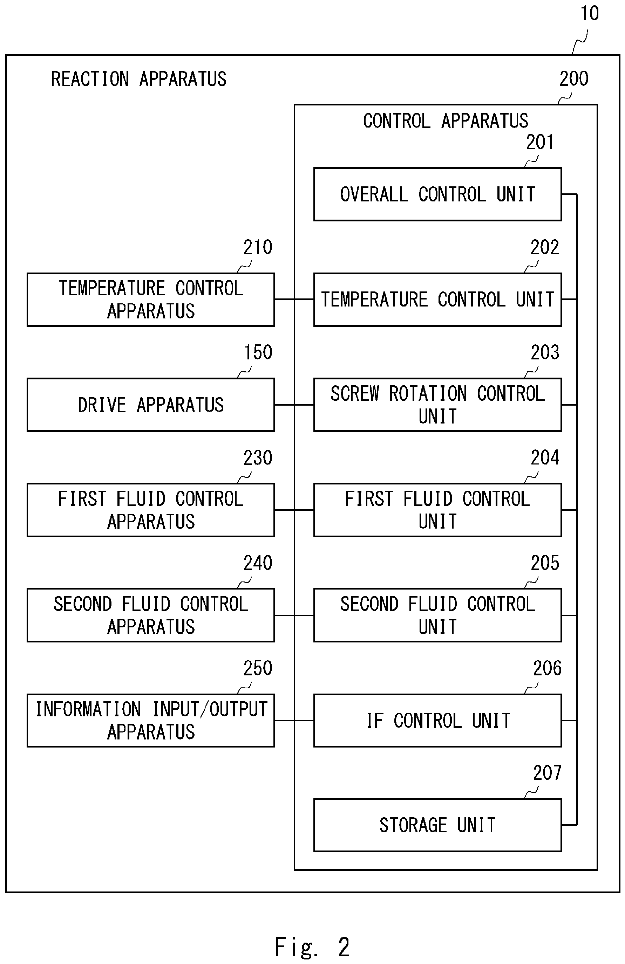

Next, the function of the reaction apparatus 10 will be described with reference to Fig. 2. Fig. 2 is a block diagram of the reaction apparatus 10 according to the first embodiment. In addition to the configuration shown in Fig. 1, the reaction apparatus 10 includes a control apparatus 200, a temperature control apparatus 210, a first fluid control apparatus 230, a second fluid control apparatus 240, and an information input/output unit 250.

The control apparatus 200 is a circuit board including an arithmetic unit such as a CPU (Central Processing Unit) or an MCU (Micro Controller Unit). The control apparatus 200 communicatively connects to the temperature control apparatus 210, the first fluid control apparatus 230, the second fluid control apparatus 240, and the information input/output unit 250, and controls their components. The control apparatus 200 achieves its functions by hardware and software mounted on a circuit board.

The control apparatus 200 has an overall control unit 201, a temperature control unit 202, a screw rotation control unit 203, a first fluid control unit 204, a second fluid control unit 205, an IF control unit 206, and a storage unit 207 as main functional components. These functional components of the control apparatus 200 may be integrated into a single unit or may be discrete components. These functional components of the control apparatus 200 may be achieved by a plurality of separate apparatuses working together.

The overall control unit 201 connects to each functional component of the control apparatus 200 and controls the overall operation of the functions. For example, the overall control unit 201 may perform an operation such as issuing an operation instruction to the screw rotation control unit 203 according to a state of a temperature supplied from the temperature control unit 202.

The temperature control unit 202 connects to the temperature control apparatus 210 to control the temperature of the reaction furnace 100 in the temperature control region 110. The temperature control unit 202 has at least one of a heating apparatus and a cooling apparatus. The temperature control unit 202 may also have one or more thermometers for controlling the temperature.

The screw rotation control unit 203 connects to the drive apparatus 150 to control the operation of the drive apparatus 150. The screw rotation control unit 203 may, for example, have a motor drive circuit for driving a motor of the drive apparatus 150. The screw rotation control unit 203 may also have a rotation sensor for monitoring the rotational speed of the motor.

The first fluid control unit 204 controls a flow of the first fluid in the first fluid control region 130. More specifically, the first fluid control unit 204 connects to the first fluid control apparatus 230 to control the operation of the first fluid control apparatus 230. The first fluid control apparatus 230 includes the first valve 134 for pumping the first fluid. The second fluid control unit 205 controls a flow of the second fluid in the second fluid control region 140. More specifically, the second fluid control unit 205 connects to the second fluid control apparatus 240 to control the operation of the second fluid control apparatus 240. The second fluid control apparatus 240 includes the second valve 144 for pumping the second fluid.

The IF control unit 206 (IF=Interface) connects to the information input/output unit 250 and is an interface for exchanging information with a user through the information input/output unit 250. That is, the IF control unit 206 accepts an operation from the user through the information input/output unit 250, and supplies information related to the accepted operation to each component of the control apparatus 200 as appropriate. The IF control unit 206 controls a state of a display unit in the information input/output unit 250.

The storage unit 207 is a storage apparatus including a nonvolatile memory such as a flash memory or a solid state drive (SSD). The storage unit 207 stores a program for the reaction apparatus 10 to implement the functions in the present disclosure. The storage unit 207 also includes a volatile memory and temporarily stores predetermined information when the control apparatus 200 is operated. The information input/output unit 250 includes, for example, a button, a switch, or a touch panel for accepting an operation from the user. The information input/output unit 250 includes a display apparatus or the like for presenting information to the user.

The functional blocks of the reaction apparatus 10 have been explained. The reaction apparatus 10 conveys the accepted raw material R10 using the screw 120, controls the temperature of the reaction furnace 100, and controls the atmosphere in the first fluid control region 130 and the second fluid control region 140.

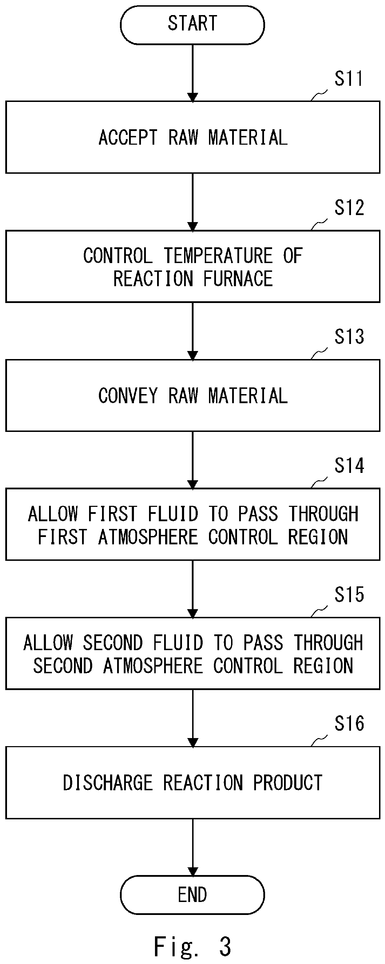

Next, a method for manufacturing a reaction product (reaction product manufacturing method) executed by the reaction apparatus 10 will be described with reference to Fig. 3. Fig. 3 is a flowchart of processing executed by the reaction apparatus 10. The flowchart shown in Fig. 3 starts by, for example, starting the supply of the raw material R10 to the reaction apparatus 10.

First, the reaction apparatus 10 receives the predetermined raw material R10 from the supply port 101 (Step S11).

Next, the control apparatus 200 of the reaction apparatus 10 controls the temperature by driving a heating apparatus or a cooling apparatus in the temperature control region 110 of the reaction furnace 100 through the temperature control unit 202 (Step S12).

Next, the control apparatus 200 of the reaction apparatus 10 drives the drive apparatus 150 through the screw rotation control unit 203. Thus, the drive apparatus 150 rotates the screw 120. Then, the screw 120 conveys the received raw material R10 toward the discharge port 102 (Step S13).

Next, the control apparatus 200 of the reaction apparatus 10 controls, through the first fluid control unit 204, the flow of the first fluid passing through the first fluid control region 130 (Step S14).

Next, the control apparatus 200 of the reaction apparatus 10 controls, through the second fluid control unit 205, the flow of the second fluid passing through the second fluid control region 140 (Step S15).

Next, the reaction apparatus 10 discharges the reaction product R11 passing through the second fluid control region 140 from the discharge port 102 (Step S16).

The reaction method executed by the reaction apparatus 10 has been described above. The method described above is illustrated along the flow in which the reaction apparatus 10 manufactures the reaction product R11 from the raw material R10 and discharges the manufactured reaction product R11. However, the reaction apparatus 10 may, for example, perform temperature control in Step S12 even before Step S11. Also, for example, the reaction apparatus 10 may simultaneously start Step S14 and Step S15.

The first embodiment has been described above. In the reaction apparatus 10 described above, the reaction apparatus 10 has two fluid control regions (first fluid control region 130 and second fluid control region 140), and instead the reaction apparatus 10 may have three or more fluid control regions. The reaction apparatus 10 may also have a plurality of temperature control regions 110 along the axial direction of the screw 120. The reaction apparatus 10 brings a plurality of fluids into contact separately at the intermediate part with the raw material R10 received from the supply port 101. The reaction apparatus 10 also controls the temperature of the reaction furnace 100 along the axial direction of the screw 120 at the intermediate part. Furthermore, the reaction apparatus 10 can convey objects inside the reaction furnace 100 and provide physical stimulation such as stirring and kneading. The reaction apparatus 10 can simultaneously and accurately perform the atmosphere control, temperature control, and physical control described above. Therefore, according to the first embodiment, it is possible to provide a reaction apparatus and so on for efficiently manufacturing a desired product.

<Second embodiment>

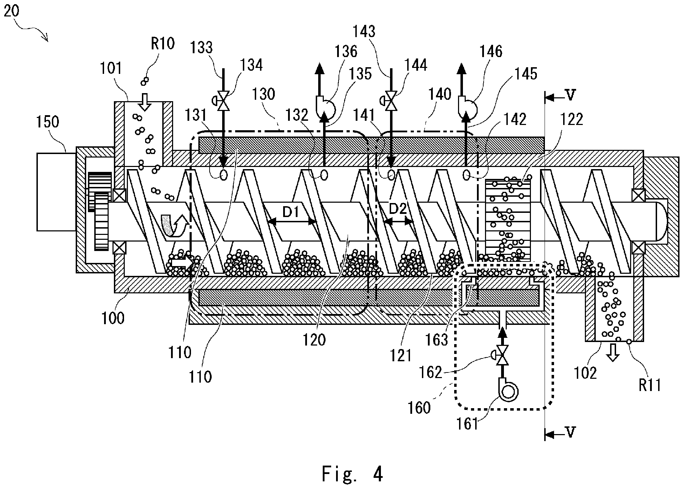

Next, a second embodiment will be described. Fig. 4 is a side view of a reaction apparatus 20 according to the second embodiment. A structure of the screw 120 in the reaction apparatus 20 shown in Fig. 4 differs from that in the reaction apparatus 10 shown in Fig. 1. The reaction apparatus 20 is different from the reaction apparatus 10 shown in Fig. 1 in that each of the first fluid control region 130 and the second fluid control region 140 includes a forced discharge mechanism for forcibly discharging a fluid from the reaction furnace 100. Further, the reaction apparatus 20 is different from the reaction apparatus 10 in that it has an airflow stirring region 160.

The screw 120 according to this embodiment differs from the screw 120 shown in Fig. 1 in the configuration of the projections 121. The screw 120 has a structure in which the pitch of the projections for conveying the raw material changes in the convey direction. In the screw 120 shown in Fig. 2, the pitch (i.e., screw pitch) of the projections 121 in the first fluid control region 130 is a distance D1, and the screw pitch of the projections 121 in the second fluid control region 140 is a distance D2. Further, the distance D1 is larger than the distance D2. That is, the screw pitch of the screw 120 corresponding to the second fluid control region 140 is smaller than the screw pitch corresponding to the first fluid control region 130. Thus, the reaction apparatus 20 sets the speed of conveying the object in the second fluid control region 140 to be slower than the speed of conveying the object in the first fluid control region 130.

The screw 120 of the reaction apparatus 20 may also have projections having a surface or arrangement that forms an angle in the range of 0 degrees to 180 degrees with respect to the convey direction for the purpose of retaining, stirring, mixing, kneading, or grinding the raw material. The screw 120 shown in Fig. 4 has a stirring part 122 between the second fluid control region 140 and the discharge port 102. The stirring part 122 has a plurality of projections parallel to the convey direction, i.e., protrusions forming an angle of 0 degrees with respect to the convey direction.

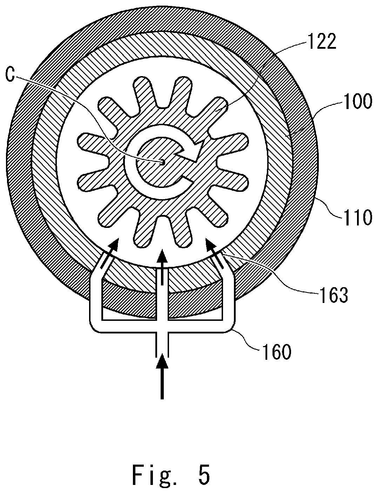

The stirring part 122 will be described with reference to Fig. 5. Fig. 5 is a cross-sectional view of a reaction furnace according to the second embodiment. The cross-sectional view shown in Fig. 5 shows the V-V section of Fig. 4. Fig. 5 shows the stirring part 122 disposed inside the reaction furnace 100. The stirring part 122 has a plurality of projections formed radially from a center C of the axis of the screw 120. The stirring part 122 rotates clockwise with the center C as a rotation axis. In this way, the stirring part 122 stirs the substance in contact with the stirring part 122.

Returning to Fig. 4, the description of the reaction apparatus 20 continues. The reaction apparatus 20 has a first forced discharge mechanism 136 in a first fluid discharge pipe 135 in the first fluid control region 130. The first forced discharge mechanism 136 increases a flow rate of a fluid discharged into the first fluid discharge pipe 135 through the first fluid outlet 132 and forcibly discharges the fluid. The first forced discharge mechanism 136 is, for example, a pump including a motor. In this case, the pump, which is the forced discharge mechanism 136, drives the motor to suck the fluid, thereby increasing the flow rate of the fluid discharged into the first fluid discharge pipe 135. By having the first valve 134 and the first forced discharge mechanism 136, the reaction apparatus 20 can suitably control the flow of the first fluid in the first fluid control region 130. Note that the first forced discharge mechanism 136 is not limited to the configuration described above if it is a mechanism that can forcibly discharge the fluid discharged from the first fluid control region 130.

Similarly, the reaction apparatus 20 has a second forced discharge mechanism 146 in the second fluid discharge pipe 145 in the second fluid control region 140. The second forced discharge mechanism 146 increases a flow rate of a fluid discharged into the second fluid discharge pipe 145 through the second fluid outlet 142. The second forced discharge mechanism 146 is, for example, a pump including a motor. In this case, the pump, which is the forced discharge mechanism 146, drives the motor to suck the fluid, thereby increasing the flow rate of the fluid discharged into the second fluid discharge pipe 145. By having the second valve 144 and the second forced discharge mechanism 146, the reaction apparatus 20 can suitably control the flow of the second fluid in the second fluid control region 140. Note that the second forced discharge mechanism 146 is not limited to the configuration described above if it is a mechanism that can forcibly discharge the fluid discharged from the second fluid control region 140.

The reaction apparatus 20 has the airflow stirring region 160 in a part corresponding to the stirring part 122. The airflow stirring region 160 generates an airflow inside the reaction furnace 100 in the intermediate part of the reaction furnace 100.

The airflow stirring region 160 has a blower fan 161, an airflow control valve 162, and blowing holes 163 as main components. The blower fan 161 pumps a predetermined inert gas to the airflow control valve 162. For the blower fan 161, for example, a gas compressor or a compressed gas cylinder may be used as an alternative. The airflow control valve 162 controls the flow rate of the inert gas pumped from the blower fan 161. The blowing hole 163 is a hole for discharging the inert gas pumped through the airflow control valve 162 into the reaction furnace 100. The blowing holes 163 have a labyrinth structure including a bent part at a part facing the inside of the reaction furnace 100. With such a structure, the airflow stirring region 160 generates an airflow and suppresses an object inside the reaction furnace 100 from entering the blowing holes 163, which are discharge ports.

Referring to Fig. 5, the airflow stirring region 160 will be described further. In the cross section shown in Fig. 5, the blowing holes 163 are arranged in three places. By having a plurality of blowing holes 163 in the airflow stirring region 160, the reaction apparatus 20 can suitably generate an airflow in a desired region inside the reaction furnace 100. This also enables the reaction apparatus 20 to suitably stir an object present inside the reaction furnace 100. It should be noted that, in place of the labyrinth structure, the diameter of the blowing holes 163 may be smaller than the particle size of objects present inside the reaction furnace 100. With such a structure, the blowing holes 163 can suppress an object present inside the reaction furnace 100 from entering.

Although the second embodiment has been described above, the configuration of the reaction apparatus 20 is not limited to the configuration described above. For example, various patterns of the shapes or configurations of the screw 120 can be considered depending on the physical stimulation applied to the raw material R10. In addition, the position where the airflow stirring region 160 is arranged is not limited to the aforementioned position and can be set at a desired position. According to the second embodiment, it is possible to provide a reaction apparatus or the like for efficiently manufacturing a desired product.

### <Third embodiment >

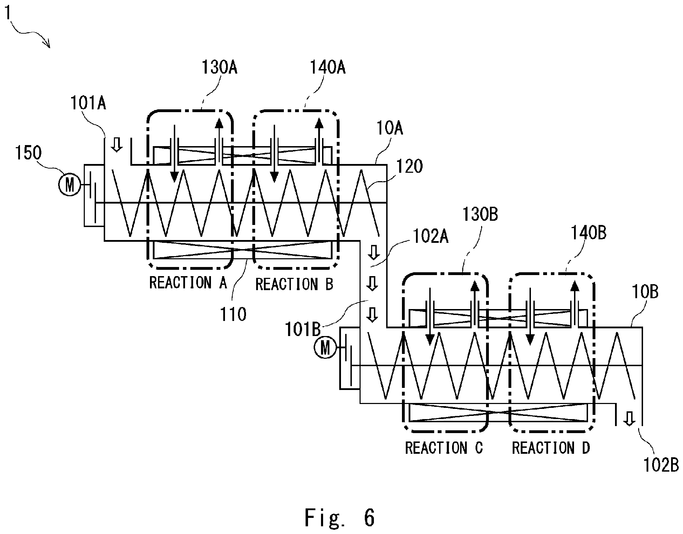

Next, a third embodiment will be described. Fig. 6 is a configuration diagram of a reaction system 1 according to the third embodiment. The reaction system 1 shown in Fig. 6 is a system in which two reaction apparatuses 10, namely, a first reaction apparatus 10A and a second reaction apparatus 10B, are coupled in series. Fig. 6 schematically shows a state in which the first reaction apparatus 10A and the second reaction apparatus 10B are coupled.

The first reaction apparatus 10A shown in Fig. 6 has a first fluid control region 130A and a second fluid control region 140A. The first fluid control region 130A imparts a reaction A to the raw material R10 received from the first supply port 101A. The second fluid control region 140A imparts a reaction B to a reaction product A generated by imparting the reaction A. The first reaction apparatus 10A discharges a reaction product B generated by imparting the reaction B from a first discharge port 102A and supplies it to a second supply port 101B of the second reaction apparatus 10B.

The second reaction apparatus 10B has a first fluid control region 130B and a second fluid control region 140B. In the second reaction apparatus 10B, the first fluid control region 130B imparts a reaction C to the reaction product B received from the second supply port 101B. The second fluid control region 140B imparts a reaction D to the reaction product C generated by imparting the reaction C. The second reaction apparatus 10B also discharges a reaction product D generated by imparting the reaction D from the second discharge port 102B.

The third embodiment has been described above. One or both of the above-described reaction apparatuses 10 may of course be the reaction apparatus 20. In addition, the reaction system according to the third embodiment may be composed of three or more reaction apparatuses 10 coupled to one another. With such a configuration, the reaction system 1 according to the third embodiment can continuously impart a plurality of reactions. In addition, with such a configuration, the reaction system 1 according to the third embodiment enables a flexible arrangement of the system itself and a flexible system configuration. That is, according to the third embodiment, it is possible to provide a reaction system that efficiently manufactures a desired product requiring a plurality of reactions.

### <Fourth embodiment>

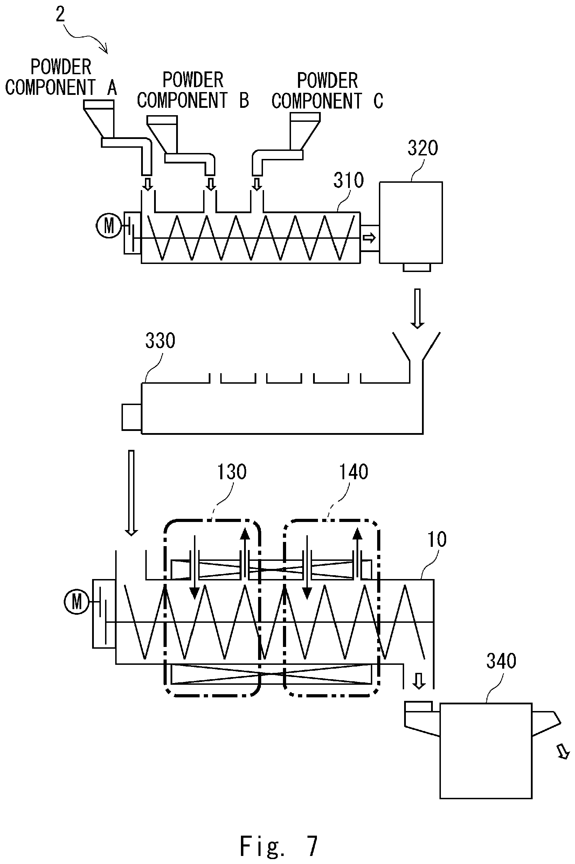

Next, a fourth embodiment will be described. Fig. 7 is a configuration diagram of a reaction system 2 according to the fourth embodiment. The reaction system 2 shown in Fig. 7 has a kneader 310, a granulator 320, a dryer 330, a reaction apparatus 10, and a grinding and classifying machine 340 as main components.

The kneader 310 (kneaded product manufacturing apparatus) receives a powder component A, a powder component B, and a powder component C and then kneads the received powder components using a screw. The kneader 310 is coupled to the granulator 320, and supplies the kneaded powder components to the granulator 320.

The granulator 320 receives the powder components kneaded by the kneader 310, and generates granules of a predetermined size from the received powder components. The granulator 320 supplies the generated granules to the dryer 330. The dryer 330 dries the granules received from the granulator 320 to generate a predetermined raw material. The dryer 330 further supplies the generated raw material to the reaction apparatus 10.

The reaction apparatus 10 receives the raw material from the dryer 330, allows the received raw material to pass through the first fluid control region 130 and the second fluid control region 140, and generates the reaction product. The reaction apparatus 10 supplies the generated reaction product to the grinding and classifying machine 340. The grinding and classifying machine 340 receives the reaction product from the reaction apparatus 10, grinds the received reaction product, and further classifies it. The grinding and classifying machine 340 then discharges the classified product.

The fourth embodiment has been described above. The configuration of the reaction system 2 is not limited to the configuration described above. For example, the reaction system 2 may have at least one of the kneader 310, the granulator 320, and the dryer 330. The reaction system 2 may not include the grinding and classifying machine 340. In the reaction system 2 described above, the reaction apparatus 10 may be replaced by the reaction apparatus 20. The reaction apparatus 10 may also be replaced by the reaction system 1 according to the third embodiment. Thus, according to the fourth embodiment, it is possible to provide a reaction system that efficiently manufactures a desired product requiring a combined reaction.

### <Fifth embodiment>

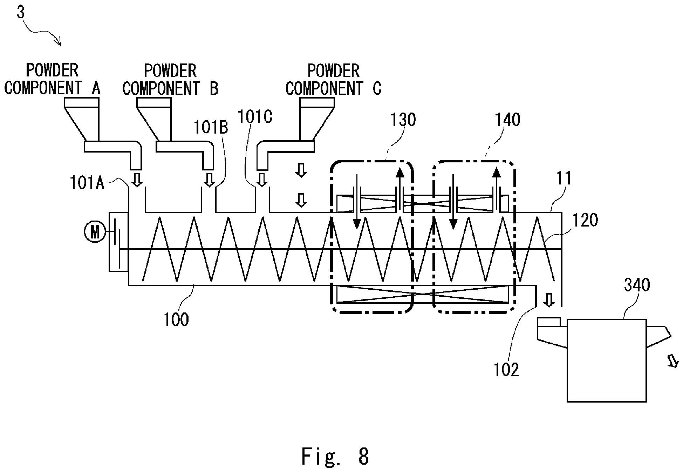

Next, a fifth embodiment will be described. Fig. 8 is a configuration diagram of a reaction system 3 according to a fifth embodiment. The reaction system 3 according to the fifth embodiment differs from the above-described reaction apparatuses in that it has supply ports for receiving a plurality of different raw materials, respectively.

The reaction system 3 of Fig. 8 includes a reaction apparatus 11 and a grinding and classifying machine 340. The reaction apparatus 11 receives a powder component A, a powder component B, and a powder component C as raw materials. That is, the reaction apparatus 11 according to the fifth embodiment has a plurality of supply ports where the reaction furnace 100 receives a plurality of different raw materials at one end. More specifically, the reaction apparatus 11 has a first supply port 101A, a second supply port 101B, and a third supply port 101C as the supply ports. Each of the first supply port 101A, the second supply port 101B, and the third supply port 101C is provided between one end of the reaction furnace 100 and the first fluid control region 130. The powder components supplied from the first supply port 101A, the second supply port 101B, and the third supply port 101C are conveyed in the direction of the discharge port 102 by the screw 120. The screw 120 may have a shape for mixing the received raw materials.

The reaction apparatus 11 allows the received powder component A, powder component B, and powder component C to pass through the first fluid control region 130 and then through the second fluid control region 140. Thus, the reaction apparatus 11 generates a reaction product and supplies the generated reaction product to the grinding and classifying machine 340. The grinding and classifying machine 340 receives the reaction product generated by the reaction apparatus 11, grinds the received reaction product, and further classifies it. The grinding and classifying machine 340 then discharges the classified product.

The fifth embodiment has been described above. In the reaction system 3 described above, the reaction apparatus 11 may have the airflow stirring region 160. As described above, according to the fifth embodiment, it is possible to provide a reaction system for efficiently manufacturing a desired product requiring a combined reaction using a plurality of raw materials.

### <Sixth embodiment>

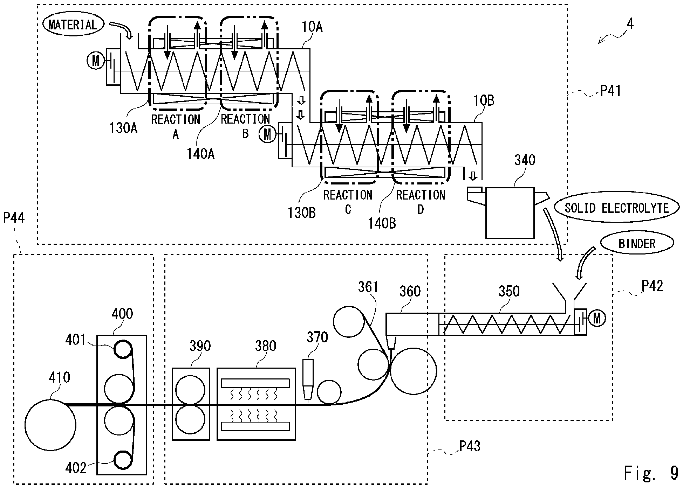

Next, a sixth embodiment will be described. Fig. 9 is a configuration diagram of a battery material manufacturing system 4 according to the sixth embodiment. The battery material manufacturing system 4 shown in Fig. 9 is a system for manufacturing, for example, a positive electrode sheet or an electrolyte sheet for a solid-state secondary battery. The battery material manufacturing system 4 has a first process region P41, a second process region P42, a third process region P43, and a fourth process region P44 as main components. That is, the battery material manufacturing system 4 manufactures a battery material through the first, second, third, and fourth processes described above.

The following example uses the battery material manufacturing system 4 to manufacture an electrolyte sheet. In the first process region P41, the battery material manufacturing system 4 manufactures a solid electrolyte. The first process region P41 includes the first reaction apparatus 10A, the second reaction apparatus 10B, and the grinding and classifying machine 340 as main components.

In the first process region P41, the first reaction apparatus 10A receives the raw material, conveys the raw material by the screw, imparts the reaction A in the first fluid control region 130A, imparts the reaction B in the second fluid control region 140A, and supplies the reaction product B to the second reaction apparatus 10B. The second reaction apparatus 10B receives the reaction product B, conveys the raw material by the screw, imparts the reaction C in the first fluid control region 130B, imparts the reaction D in the second fluid control region 140B, thereby generating a solid electrolyte, and supplies it to the grinding and classifying machine 340. The grinding and classifying machine 340 grinds the received solid electrolyte and further classifies it. Then, the grinding and classifying machine 340 supplies the classified solid electrolyte to the second process region P42.

In the second process region P42, the battery material manufacturing system 4 mixes the solid electrolyte with a binder resin. The second process region P42 has an extruder 350. The extruder 350 receives the solid electrolyte generated in the first process region P41 together with the binder resin supplied separately, and kneads the received solid electrolyte and the binder resin to manufacture a kneaded product. The extruder 350 supplies the manufactured kneaded product to the third process region P43.

In the third process region P43, the battery material manufacturing system 4 receives the kneaded product from the second process region P42 and manufactures an electrolyte sheet from the received kneaded product. The third process region P43 has an extrusion molding machine 360, a coater 370, a dryer 380, and a rolling mill 390 as main components.

The extrusion molding machine 360 receives the kneaded product from the extruder 350, and extrudes the received kneaded product to continuously manufacture a sheet-like molded product. At this time, the third process region P43 may be integrated by combining a base material 361 such as a nonwoven fabric with the sheet extruded by the extrusion molding machine 360. In other words, the third process region P43 includes a sheet manufacturing apparatus.

Next, the coater 370 applies a predetermined protective film or the like to the surface of the molded product. Further, the dryer 380 dries the molded product to which the predetermined protective film or the like is applied and supplies it to a rolling mill 390. The rolling mill 390 rolls the dried molded product and supplies it to the fourth process region P44.

In the fourth process region P44, the battery material manufacturing system 4 has a step of bonding a predetermined sheet and winding the sheet. The fourth process region P44 has a laminator 400 and a winding machine 410 as main components. The laminator 400 bonds a positive electrode sheet 401 containing a positive electrode active material and a negative electrode sheet 402 containing a negative electrode active material to the sheet-like molded product supplied from the rolling mill 390, and supplies the laminated product to the winding machine 410. The winding machine 410 winds an electrolyte sheet supplied from the laminator 400.

The configuration of the battery material manufacturing system 4 and the battery material manufacturing method executed by the battery material manufacturing system 4 have been explained. The battery material manufacturing system 4 according to the sixth embodiment can consistently and efficiently manufacture reaction products such as solid electrolytes that require a plurality of reactions, and continuously manufacture sheets using the manufactured reaction products. The battery material manufacturing system 4 according to this embodiment is not limited to the one shown in Fig. 9. For example, the battery material manufacturing system 4 may not have the laminator 400 in the fourth process region P44.

The system shown in Fig. 9 may also manufacture a predetermined material that is not a battery material. That is, the system shown in Fig. 9 may be referred to as a material manufacturing system. The method performed by such a material manufacturing system may also be referred to as a material manufacturing method.

As described above, the battery material manufacturing system 4 shown in Fig. 9 can manufacture an electrolyte sheet in the third process region P43, laminate a positive electrode sheet and a negative electrode sheet in the fourth process region P44. Thus, the battery material manufacturing system 4 can manufacture a battery. In this case, the system shown in Fig. 9 can be referred to as a battery manufacturing system, and the method executed by the system shown in Fig. 9 can be referred to as a battery manufacturing method.

As described above, according to the sixth embodiment, a system or method for efficiently manufacturing a desired battery material, battery, or predetermined material can be provided.

It should be noted that the present disclosure is not limited to the above embodiments and can be suitably modified to the extent that it does not deviate from the purpose.

This application is based upon and claims the benefit of priority from Japanese patent application No. 2021-126703, filed on August 2, 2021, the disclosure of which is incorporated herein in its entirety by reference.

### Reference Signs List

- 1: REACTION SYSTEM
- 2: REACTION SYSTEM
- 3: REACTION SYSTEM
- 4: BATTERY MATERIAL MANUFACTURING SYSTEM
- 10: REACTION APPARATUS
- 11: REACTION APPARATUS
- 20: REACTION APPARATUS
- 100: REACTION FURNACE
- 101: SUPPLY PORT
- 102: DISCHARGE PORT
- 110: TEMPERATURE CONTROL REGION
- 120: SCREW
- 121: PROJECTION
- 122: STIRRING PART
- 130: FIRST FLUID CONTROL REGION
- 131: FIRST FLUID INLET
- 132: FIRST FLUID OUTLET
- 133: FIRST FLUID SUPPLY PIPE
- 134: FIRST VALVE
- 135: FIRST FLUID DISCHARGE PIPE
- 136: FIRST FORCED DISCHARGE MECHANISM
- 140: SECOND FLUID CONTROL REGION
- 141: SECOND FLUID INLET
- 142: SECOND FLUID OUTLET
- 143: SECOND FLUID SUPPLY PIPE
- 144: SECOND VALVE
- 145: SECOND FLUID DISCHARGE PIPE
- 146: SECOND FORCED DISCHARGE MECHANISM
- 150: DRIVE APPARATUS
- 160: AIRFLOW STIRRING REGION
- 161: BLOWER FAN
- 162: AIRFLOW CONTROL VALVE
- 163: BLOWING HOLE
- 200: CONTROL APPARATUS
- 201: OVERALL CONTROL UNIT
- 202: TEMPERATURE CONTROL UNIT
- 203: SCREW ROTATION CONTROL UNIT
- 204: FIRST FLUID CONTROL UNIT
- 205: SECOND FLUID CONTROL UNIT
- 206: IF CONTROL UNIT
- 207: STORAGE UNIT
- 210: TEMPERATURE CONTROL APPARATUS
- 230: FIRST FLUID CONTROL APPARATUS
- 240: SECOND FLUID CONTROL APPARATUS
- 250: INFORMATION INPUT/OUTPUT UNIT
- 310: KNEADER
- 320: GRANULATOR
- 330: DRYER
- 340: GRINDING AND CLASSIFYING MACHINE
- 350: EXTRUDER
- 360: EXTRUSION MOLDING MACHINE
- 361: BASE MATERIAL
- 370: COATER
- 380: DRYER
- 390: ROLLING MILL
- 400: LAMINATOR
- 401: POSITIVE ELECTRODE SHEET
- 402: NEGATIVE ELECTRODE SHEET
- 410: WINDING MACHINE

## Claims

1. A reaction apparatus comprising:
a cylindrical reaction furnace including a supply port configured to receive a raw material to be supplied at one end and a discharge port configured to discharge a reaction product at another end;
a temperature control region including a heating apparatus or a cooling apparatus configured to control a temperature of the reaction furnace at a predetermined position in an intermediate part between the supply port and the discharge port;
a screw extending from the one end of the reaction furnace to the other end thereof configured to be able to convey the raw material supplied from the supply port toward the discharge port by rotating;
a first fluid control region including a first fluid inlet and a first fluid outlet configured to allow a first fluid to pass through the reaction furnace in a predetermined region in the intermediate part; and
a second fluid control region including a second fluid inlet and a second fluid outlet configured to allow a second fluid to pass through a region different from the first fluid control region in the intermediate part.

2. The reaction apparatus according to claim 1, further comprising a screw drive apparatus configured to vary a rotational speed of the screw.

3. The reaction apparatus according to claim 1, wherein the screw has a structure in which a pitch of projections for conveying the raw material varies in a convey direction.

4. The reaction apparatus according to any one of claims 1 to 3, wherein the screw including a projection having a surface or arrangement forming an angle in a range of 0 degrees to 180 degrees with respect to the convey direction for the purpose of retaining, stirring, mixing, kneading, or grinding the raw material.

5. The reaction apparatus according to any one of claims 1 to 4, further comprising a plurality of the screws arranged in parallel inside the reaction furnace.

6. The reaction apparatus according to any one of claims 1 to 5, wherein each of the first or second fluid control region includes a forced discharge mechanism configured to forcibly discharge a fluid from the reaction furnace.

7. The reaction apparatus according to any one of claims 1 to 6, further comprising an airflow stirring part including a blowing hole for generating an airflow inside the reaction furnace in the intermediate part.

8. The reaction apparatus according to claim 7, wherein the airflow stirring part has a labyrinth structure in which the blowing hole includes a bent part.

9. The reaction apparatus according to any one of claims 1 to 8, wherein the reaction furnace comprises a plurality of the supply ports receiving a plurality of different raw materials, respectively, at the one end of the reaction furnace.

10. A reaction system comprising a first reaction apparatus and a second reaction apparatus, the first reaction apparatus and the second reaction apparatus being the reaction apparatus according to any one of claims 1 to 9 coupled in series.

11. A reaction system comprising:
at least one of a kneader configured to manufacture a kneaded product by kneading a plurality of powders with different compositions, a granulator configured to manufacture a granulated product by granulating the kneaded product, and a dryer configured to manufacture the raw material by drying the granulated product; and
the reaction apparatus according to any one of claims 1 to 9 configured to receive any one of the kneaded product, the granulated product, and the raw material and manufacture a reaction product.

12. A battery material manufacturing system comprising:
a kneaded product manufacturing apparatus configured to knead a solid electrolyte manufactured as the reaction product by the reaction apparatus according to any one of claims 1 to 9 and a binder resin and continuously extrude a mixture of the solid electrolyte and the binder resin to thereby manufacture a kneaded product; and
a sheet manufacturing apparatus configured to form the kneaded product into a sheet.

13. The battery material manufacturing system according to claim 12, further comprising, as the reaction apparatus:
a first reaction apparatus; and
a second reaction apparatus configured to receive a first reaction product manufactured by the first reaction apparatus and manufacture the solid electrolyte as a second reaction product, wherein the kneaded product manufacturing apparatus receives the second reaction product and manufactures the kneaded product.

14. A battery manufacturing system comprising:
the battery material manufacturing system according to claim 12 or 13; and
a laminator configured to laminate a positive electrode sheet containing a positive electrode sheet containing a positive electrode active material on one surface of an electrolyte sheet formed by the sheet manufacturing apparatus included in the battery material manufacturing system and a negative electrode sheet containing a negative electrode active material on another surface of the electrolyte sheet.

15. A material manufacturing system comprising:
a kneaded product manufacturing apparatus configured to knead the reaction product manufactured by the reaction apparatus according to any one of claims 1 to 9 and a binder resin and continuously extrude a mixture of the solid electrolyte and the binder resin to thereby manufacture a kneaded product; and
a sheet manufacturing apparatus configured to form the kneaded product into a sheet.

16. The material manufacturing system according to claim 15, further comprising, as the reaction apparatus:
a first reaction apparatus; and
a second reaction apparatus configured to receive a first reaction product manufactured by the first reaction apparatus and manufacture a second reaction product, wherein the kneaded product manufacturing apparatus receives the second reaction product and manufactures the kneaded product.

17. A reaction product manufacturing method comprising:
receiving a predetermined material to a cylindrical reaction furnace including a supply port configured to receive a raw material to be supplied at one end and a discharge port configured to discharge a reaction product at another end from the supply port;
conveying the raw material toward the discharge port by a screw extending from the one end of the reaction furnace to the other end thereof;
controlling a temperature of the reaction furnace at a predetermined position in an intermediate part between the supply port and the discharge port;
allowing a first fluid to pass through the reaction furnace in a first fluid control region provided in the intermediate part;
allowing a second fluid to pass through the reaction furnace in a second fluid control region, the second fluid control region being different from the first fluid control region in the intermediate part; and
discharging the reaction product passed through the second fluid control region from the discharge port.

18. A battery material manufacturing method comprising:
receiving a predetermined material to a cylindrical reaction furnace including a supply port configured to receive a raw material to be supplied at one end and a discharge port configured to discharge a reaction product at another end from the supply port;
conveying the raw material toward the discharge port by a screw extending from the one end of the reaction furnace to the other end thereof;
controlling a temperature of the reaction furnace at a predetermined position in an intermediate part between the supply port and the discharge port;
allowing a first fluid to pass through the reaction furnace in a first fluid control region provided in the intermediate part;
allowing a second fluid to pass through the reaction furnace in a second fluid control region, the second fluid control region being different from the first fluid control region and provided in the intermediate part;
discharging a solid electrolyte manufactured as the reaction product from the discharge port;
kneading the discharged solid electrolyte and a binder resin and continuously extruding a mixture of the solid electrolyte and the binder resin to thereby manufacture a kneaded product; and
forming the kneaded product into a sheet to manufacture a battery material.

19. A battery manufacturing method comprising:
after executing the battery material manufacturing method according to claim 18,
laminating a positive electrode sheet containing a positive electrode active material on one surface of an electrolyte sheet manufactured by the battery material manufacturing method; and
laminating a negative electrode sheet containing a negative electrode active material on another surface of the electrolyte sheet.
